# EUROPEAN PATENT APPLICATION

(11) **EP 2 469 863 A2**
(43) Date of publication of application: **27.06.2012**
(21) Application number: 11174485.0
(22) Date of filing: 19.07.2011
(51) Int. Cl.: H04N 13/00

(54) **Video processing apparatus and video processing method**

(30) Priority: 21.12.2010 JP 2010284747
(71) Applicant: Kabushiki Kaisha Toshiba, Tokyo 105-8001 (JP)
(72) Inventor: Sakurai, Tokuhiro, Tokyo, 105-8001 (JP); Kinoshita, Teruo, Tokyo, 105-8001 (JP); Toma, Hideyuki, Tokyo, 105-8001 (JP)
(74) Representative: HOFFMANN EITLE

(57) **Abstract**

According to one embodiment, a video processing apparatus includes a memory (261c), a detector (261e), and a controller (261). The memory is configured to store 2D or 3D output settings according to one or more genres. The detector is configured to detect a genre of an input video signal from genre information. The controller is configured to decide a 2D image or a 3D image to be output based on the output setting and the detected genre, and to execute control required to output a 2D image or a 3D image corresponding to the input video signal based on the output decision.

## Description

Embodiments described herein relate generally to a video processing apparatus and video processing method.

In recent years, it is demanded to display three-dimensional (3D) images, and television receivers and players which are compatible with 3D images will become popular in the future. As a 3D-image-compatible device, a 3D conversion function incorporating device which includes a 3D conversion function is known. The 3D conversion function incorporating device can convert a two-dimensional (2D) image (broadcast signal or content of a DVD) into a 3D image by the 3D conversion function, and can output the 3D image. Alternatively, as another 3D-image-compatible device, a 2D conversion function incorporating device which includes a 2D conversion function is known. The 2D conversion function incorporating device can convert a 3D image into a 2D image by the 2D conversion function, and can output the 2D image. Note that the 3D-image-compatible device can output a 3D image intact based on a 3D image content without any conversion processing.

When the 3D-image-compatible device is, for example, a television receiver, a 3D-compatible television receiver which includes at least one of the 3D conversion function and 2D conversion function, or a 3D-compatible television receiver which does not include any conversion function is known.

The user wants to enjoy a 2D image or 3D image according to various conditions.

A general architecture that implements the various features of the embodiments will now be described with reference to the drawings. The drawings and the associated descriptions are provided to illustrate the embodiments and not to limit the scope of the invention.
FIG. 1 is a block diagram showing an example of the arrangement of a television broadcast receiver (video processing apparatus) according to respective embodiments;
FIG. 2 is a view showing an example of a genre-dependent 2D/3D output setting screen;
FIG. 3 is a view showing an example of a genre-dependent 2D/3D output setting/genre-dependent 3D processing parameter setting screen; and
FIG. 4 is a view showing an example of an input source designation screen.

Various embodiments will be described hereinafter with reference to the accompanying drawings.

In general, according to one embodiment, a video processing apparatus includes a memory (261c), a detector (261e), and a controller (261). The memory is configured to store 2D or 3D output settings according to one or more genres. The detector is configured to detect a genre of an input video signal from genre information. The controller is configured to decide a 2D image or a 3D image to be output based on the output setting and the detected genre, and to execute control required to output a 2D image or a 3D image corresponding to the input video signal based on the output decision.

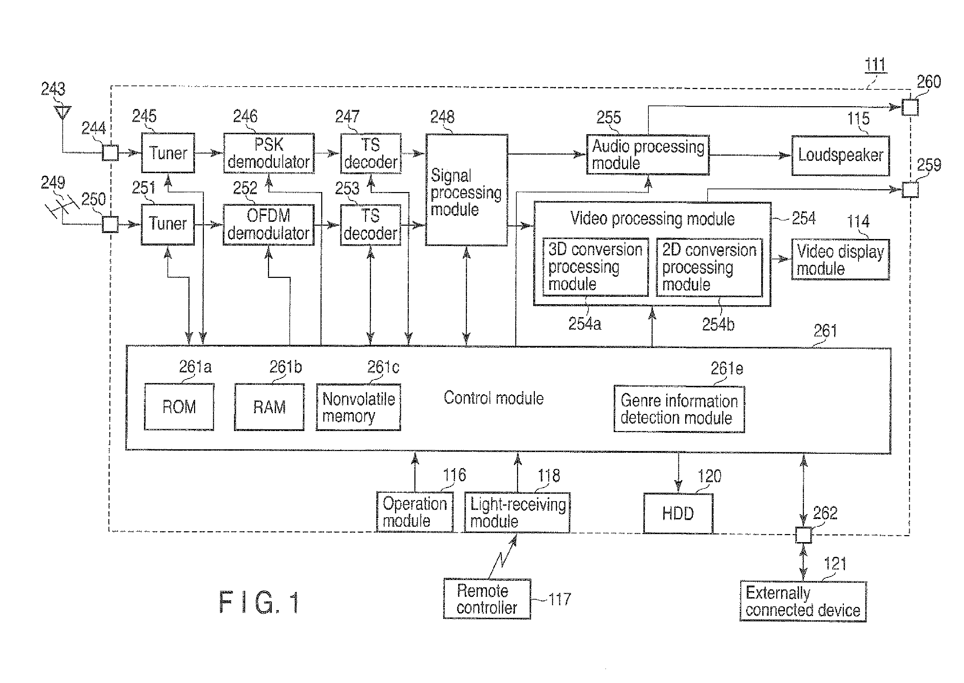

FIG. 1 is a block diagram showing an example of the arrangement of a television broadcast receiver (video processing apparatus) according to respective embodiments. The respective embodiments will explain a television broadcast receiver 111 which includes a video display module 114, but the video display module 114 is not an indispensable component. For example, video processing (2D or 3D image output processing according to conditions) to be described in the respective embodiments is also applicable to a video processing apparatus of a DVD recorder/player, BD recorder/player, or HDD recorder/player.

For example, a television broadcast receiver 111 includes a video display module 114, loudspeaker 115, operation module 116, light-receiving module 118, HDD 120, broadcast signal input terminals 244 and 250, output terminals 259 and 260, tuners 245 and 251, phase-shift keying (PSK) demodulator 246, orthogonal frequency division multiplexing (OFDM) demodulator 252, transport stream (TS) decoders 297 and 253, signal processing module 248, audio processing module 255, video processing module 254, control module 261, and input/output terminal 262. Note that the broadcast signal input terminals 244 and 250 are terminals used to input broadcast signals (including video signals). The input/output terminal 262 is a terminal used to input external signals (including video signals) from an externally connected device (HDD, DVD player, or server on a network) 121.

The video processing module 254 includes a 3D conversion processing module 254a and 2D conversion processing module 254b.

The 3D conversion processing module 254a converts an original 2D video signal received via the broadcast signal input terminal 244 or 250 or the input/output terminal 262 into a 3D video signal for 3D glasses or that for the naked eye (2D-to-3D conversion), and outputs the 3D video signal. The 3D conversion processing module 254a converts a 2D video signal recorded on the HDD 120 into a 3D video signal for 3D glasses or that for the naked eye, and outputs the 3D video signal.

The 2D conversion processing module 254b converts an original 3D video signal for 3D glasses or that for the naked eye, which is received via the broadcast signal input terminal 244 or 250 or the input/output terminal 262, into a 2D video signal (3D-to-2D conversion), and outputs the 2D video signal. Also, the 2D conversion processing module 254b converts an original 3D video signal for 3D glasses or that for the naked eye recorded on the HDD 120 into a 2D video signal, and outputs the 2D video signal.

Also, the video processing module 254 can output a 2D video signal as a 2D image and a 3D video signal as a 3D image without any 2D-to-3D or 3D-to-2D conversion.

The control module 261 includes a ROM 261a, RAM 261b, nonvolatile memory 261c, and genre information detection module 261e. The genre information detection module 261e detects genre information included in a video signal or control signal supplied from various video sources such as broadcast signals and DVDs. The genre information includes "news/report", "sports", "information/tabloid TV show", "drama", "movie", "music", "cartoon", and "variety show". Alternatively, the genre information detection module 261e detects a program ID and genre information from an electronic program guide provided from an external server via the Internet.

Respective embodiments will be described hereinafter. Note that the television broadcast receiver 111 can combine and execute some or all of the following embodiments.

### (First Embodiment)

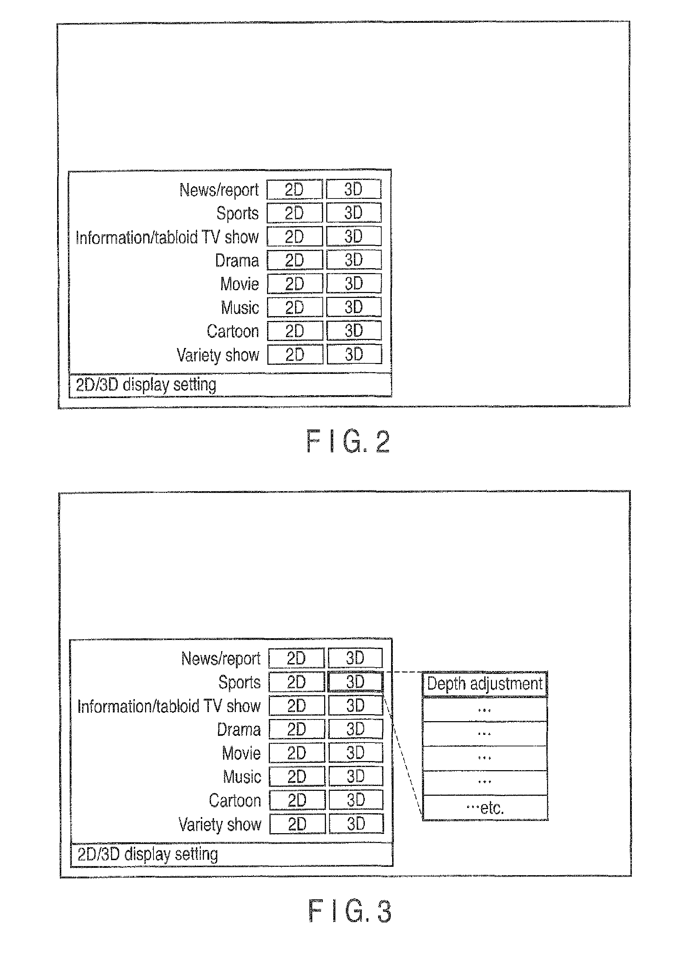

FIG. 2 is a view showing an example of a genre-dependent 2D/3D output setting screen.

The user can set genre-dependent 2D/3D outputs and can change genre-dependent 2D/3D output settings using the operation module 116 or a remote controller 117. For example, when the light-receiving module 118 of the television broadcast receiver 111 receives a setting screen display instruction from the remote controller 117, the control module 261 controls to display a setting screen based on the setting screen display instruction. In response to this, the video processing module 254 outputs display information required to display the setting screen shown in FIG. 2, and the video display module 114 displays the setting screen shown in FIG. 2.

The user can set genre-dependent 2D or 3D outputs and can change settings via the setting screen using, for example, the remote controller 117. For example, the user can designate a first genre (news/report), and can select a 2D output setting for the first genre using, for example, the remote controller 117. Also, the user can designate a second genre (sports), and can select a 3D output setting for the second genre. The nonvolatile memory 261c stores genre-dependent 2D or 3D output settings. For example, the nonvolatile memory 261c stores the 2D output setting of the first genre, and the 3D output setting of the second genre.

The genre information detection module 261e detects genre information from an input signal input via the broadcast signal input terminal 244 or 250 or the input/output terminal 262, and detects (specifies) a genre of a program of this input signal (a video signal included in this input signal) from the genre information. Alternatively, the genre information detection module 261e detects a program ID and genre information from an electronic program guide input via the input/output terminal 262 or the Internet, and detects (specifies) a genre of this program ID.

The control module 261 decides (selects) a 2D or 3D image to be output based on the genre-dependent 2D or 3D output setting stored in the nonvolatile memory 261c and the genre of the program (or program ID) detected (specified) by the genre information detection module 261e, and controls to output a 2D or 3D image corresponding to a video signal included in the input signal (that of this program or that of this program ID) based on the output decision result.

For example, the control module 261 controls to output a 2D image corresponding to a video signal of a program of the first genre based on the 2D output setting of the first genre. When the video signal of the program of the first genre is a 2D video signal, the control module 261 sets to disable 2D and 3D conversion functions (or switches to disable the enabled 2D conversion function and to disable the enabled 3D conversion function) based on the 2D output setting of the first genre. Then, the video processing module 254 outputs a 2D video signal of the program of the first genre, and the video display module 114 displays the program of the first genre as a 2D image.

When the video signal of the program of the first genre is a 3D video signal, the control module 261 sets to enable the 2D conversion function and to disable the 3D conversion function (or switches to enable the disabled 2D conversion function and to disable the enabled 3D conversion function) based on the 2D output setting of the first genre. Thus, the 2D conversion processing module 254b of the video processing module 254 converts the 3D video signal of the program of the first genre into a 2D video signal and outputs the 2D video signal, and the video display module 114 displays the program of the first genre as a 2D image.

Also, the control module 261 controls to output a 3D image corresponding to a video signal of a program of the second genre based on the 3D output setting of the second genre. When the video signal of the program of the second genre is a 3D video signal, the control module 261 sets to disable the 2D and 3D conversion functions (or switches to disable the enabled 2D conversion function and to disable the enabled 3D conversion function) based on the 3D output setting of the second genre. Then, the video processing module 254 outputs a 3D video signal of the program of the second genre, and the video display module 114 displays the program of the second genre as a 3D image.

When the video signal of the program of the second genre is a 2D video signal, the control module 261 sets to enable the 3D conversion function and to disable the 2D conversion function (or switches to enable the disabled 3D conversion function and to disable the enabled 2D conversion function) based on the 3D output setting of the second genre. Thus, the 3D conversion processing module 254a of the video processing module 254 converts the 2D video signal of the program of the second genre into a 3D video signal and outputs the 3D video signal, and the video display module 114 displays the program of the second genre as a 3D image.

### (Second Embodiment)

FIG. 3 is a view showing an example of a genre-dependent 2D/3D output setting/genre-dependent 3D processing parameter setting screen.

The user can set genre-dependent 2D/3D outputs, can change genre-dependent 2D/3D output settings, can set genre-dependent 3D processing parameters, and can change the genre-dependent 3D processing parameters using the operation module 116 or remote controller 117. For example, when the light-receiving module 118 of the television broadcast receiver 111 receives a setting screen display instruction from the remote controller 117, the control module 261 controls to display a setting screen based on the setting screen display instruction. In response to this, the video processing module 254 outputs display information required to display the setting screen shown in FIG. 3, and the video display module 114 displays the setting screen shown in FIG. 3.

The user can set genre-dependent 2D or 3D outputs, can change settings, can set genre-dependent 3D processing parameters, and can change settings via the setting screen using, for example, the remote controller 117. For example, the user can set, using the remote controller 117 or the like, a 2D output for a first genre (news/report), can set a 3D output for a second genre (sports), can set a 3D output for a third genre (movie), can set a first 3D processing parameter for the second genre, and can set a second 3D processing parameter for the third genre. The nonvolatile memory 261c stores genre-dependent 2D or 3D output settings and genre-dependent 3D processing parameters. For example, the nonvolatile memory 261c stores the 2D output setting of the first genre, the 3D output setting of the second genre, the 3D output setting of the third genre, the first 3D processing parameter of the second genre, and the second 3D processing parameter of the third genre.

The 3D processing parameters are 3D image quality processing parameters, and include, for example, a depth adjustment parameter, gamma correction parameter, and contrast adjustment parameter. The video processing module 254 adjusts 3D image quality (for example, depth) based on the 3D image quality processing parameters (for example, depth adjustment parameter). The depth adjustment includes adjustment of a projection degree of an image and that of a recess degree of an image.

Genre detection of a program (or program ID) by the genre information detection module 261e is as described above, and a detailed description thereof will not be repeated.

The control module 261 controls to output a 2D or 3D image corresponding to a video signal included in an input signal based on the genre-dependent 2D or 3D output setting and genre-dependent 3D processing parameters, which are stored in the nonvolatile memory 261c, and the genre of a program (or program ID) detected (specified) by the genre information detection module 261e.

For example, the control module 261 controls to output a 3D image (for example, a 3D image added with a sense of depth of a first level) corresponding to a video signal of a program of the second genre based on the 3D output setting and the first 3D processing parameter (for example, to add the sense of depth of the first level) of the second genre. When the video signal of the program of the second genre is a 3D video signal, the video processing module 254 processes the 3D video signal of the program of the second genre based on the first 3D processing parameter, and outputs the 3D video signal processed based on the first 3D processing parameter. Then, the video display module 114 displays the program of the second genre as a 3D image added with the sense of depth of the first level. When the video signal of the program of the second genre is a 2D video signal, the video processing module 254 and 3D conversion processing module 254a convert the 2D video signal of the program of the second genre into a 3D video signal based on the first 3D processing parameter, and output the 3D video signal processed based on the first 3D processing parameter. Then, the video display module 114 displays the program of the second genre as a 3D image added with the sense of depth of the first level.

On the other hand, the control module 261 controls to output a 3D image (for example, a 3D image added with a sense of depth of a second level) corresponding to a video signal of a program of the third genre based on the 3D output setting and the second 3D processing parameter (for example, to add the sense of depth of the second level) of the third genre. When the video signal of the program of the third genre is a 3D video signal, the video processing module 254 processes the 3D video signal of the program of the third genre based on the second 3D processing parameter, and outputs the 3D video signal processed based on the second 3D processing parameter. Then, the video display module 114 displays the program of the third genre as a 3D image added with the sense of depth of the second level. When the video signal of the program of the third genre is a 2D video signal, the video processing module 254 and 3D conversion processing module 254a convert the 2D video signal of the program of the third genre into a 3D video signal based on the second 3D processing parameter, and output the 3D video signal processed based on the second 3D processing parameter. Then, the video display module 114 displays the program of the third genre as a 3D image added with the sense of depth of the second level.

### (Third Embodiment)

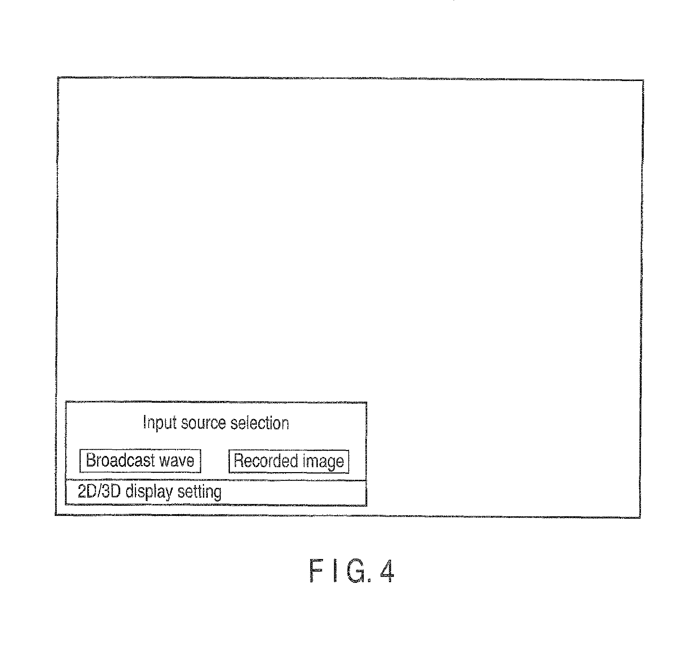

FIG. 4 is a view showing an example of an input source designation screen.

The user can designate an input source using the operation module 116 or remote controller 117. For example, when the light-receiving module 118 of the television broadcast receiver 111 receives a designation screen display instruction from the remote controller 117, the control module 261 controls to display a designation screen based on the designation screen display instruction. In response to this, the video processing module 254 outputs display information required to display the designation screen shown in FIG. 4, and the video display module 114 displays the designation screen shown in FIG. 4.

The user can designate an input source via the designation screen using, for example, the remote controller 117. After the input source is designated, the user can set genre-dependent 2D/3D outputs and can change genre-dependent 2D/3D output settings via the setting screen shown in FIG. 2 using the operation module 116 or remote controller 117. Alternatively, after the input source is designated, the user can set genre-dependent 2D/3D outputs, can change genre-dependent 2D/3D output settings, can set genre-dependent 3D processing parameters, and can change the genre-dependent 3D processing parameters via the setting screen shown in FIG. 3 using the operation module 116 or remote controller 117.

For example, the user can designate broadcast signals as an input source, and can set a 2D output for a first genre (news/report), a 3D output for a second genre (sports), a 3D output for a third genre (movie), a first 3D processing parameter for the second genre, and a second 3D processing parameter for the third genre, using, for example, the remote controller 117. The nonvolatile memory 261c stores designation of the input source, genre-dependent 2D or 3D output settings, and genre-dependent 3D processing parameters. For example, the nonvolatile memory 261c stores designation of the broadcast signals, the 2D output setting of the first genre, the 3D output setting of the second genre, the 3D output setting of the third genre, the first 3D processing parameter of the second genre, and the second 3D processing parameter of the third genre.

Also, the user can designate recorded images as an input source, and can set a 2D output for the first genre (news/report), a 2D output also for the second genre (sports), a 3D output for the third genre (movie), and the first 3D processing parameter for the third genre, using, for example, the remote controller 117. For example, the nonvolatile memory 261c stores designation of the recorded images, the 2D output setting of the first genre, the 2D output setting of the second genre, the 3D output setting of the third genre, and the first 3D processing parameter of the third genre. Note that the input sources include broadcast signals from the broadcast signal input terminals 244 and 250, recorded video signals from the HDD 120, and external input signals from the input/output terminal 262.

The control module 261 controls to output a 2D or 3D image corresponding to a video signal included in an input signal based on designation of the input source, the genre-dependent 2D or 3D output settings, and genre-dependent 3D processing parameters, which are stored in the nonvolatile memory 261c, and the detected (specified) genre of a program (or program ID).

For example, the control module 261 controls to output a 3D image (for example, a 3D image added with a sense of depth of a first level) corresponding to a video signal of a program of the second genre, which is obtained from an broadcast signal input (broadcast signal input terminal 244 or 250) based on designation of the broadcast signals, the 3D output setting and the first 3D processing parameter (for example, to add the sense of depth of the first level) of the second genre. When the video signal of the program of the second genre is a 3D video signal, the video processing module 254 processes the 3D video signal of the program of the second genre based on the first 3D processing parameter, and outputs the 3D video signal processed based on the first 3D processing parameter. Then, the video display module 114 displays the program of the second genre as a 3D image added with the sense of depth of the first level. When the video signal of the program of the second genre is a 2D video signal, the video processing module 254 and 3D conversion processing module 254a convert the 2D video signal of the program of the second genre into a 3D video signal based on the first 3D processing parameter, and output the 3D video signal processed based on the first 3D processing parameter. Then, the video display module 114 displays the program of the second genre as a 3D image added with the sense of depth of the first level.

For example, the control module 261 controls to output a 3D image (for example, a 3D image added with the sense of depth of the first level) corresponding to a video signal of a program of the third genre, which is obtained from a recorded image input (HDD 120), based on designation of the recorded images, the 3D output setting and the first 3D processing parameter (for example, to add the sense of depth of the first level) of the third genre. When the video signal of the program of the third genre is a 3D video signal, the video processing module 254 processes the 3D video signal of the program of the third genre based on the first 3D processing parameter, and outputs the 3D video signal processed based on the first 3D processing parameter. Then, the video display module 114 displays the program of the third genre as a 3D image added with the sense of depth of the first level. When the video signal of the program of the third genre is a 2D video signal, the video processing module 254 and 3D conversion processing module 254a convert the 2D video signal of the program of the third genre into a 3D video signal based on the first 3D processing parameter, and output the 3D video signal processed based on the first 3D processing parameter. Then, the video display module 114 displays the program of the third genre as a 3D image added with the sense of depth of the first level.

Note that the 3D image may be that compatible with either a glasses system or naked-eye system. For example, a 3D image compatible with shutter glasses is configured by a plurality of right-eye images and a plurality of left-eye images. The television broadcast receiver 111 alternately outputs (displays) right- and left-eye images, and transmits sync signals synchronized with alternate output timings to the shutter glasses. The shutter glasses open a left-eye shutter and close a right-eye shutter at a left-eye image display timing. Also, the shutter glasses open the right-eye shutter and close the left-eye shutter at a right-eye image display timing. Then, the user who wears the shutter glasses can enjoy a 3D image by viewing the left-eye images at the left-eye image display timings and the right-eye images at the right-eye image display timings.

Also, the 3D image compatible with the naked-eye system includes, for example, a 3D image compatible with a binocular disparity system using a binocular disparity, and a 3D image compatible with a spatial image reconstruction system which actually forms a spatial image. The binocular disparity system can be further classified into a two-view system and multi-view system. The two-view system allows the right and left eyes to respectively view right- and left-eye images. The multi-view system increases an information amount by setting a plurality of viewing positions at the time of image capturing to further broaden a stereoscopic image viewing range. The spatial image reconstruction system can be further classified into a holography system and integral photography system (ray reconstruction method). The integral photography system may also be classified as the binocular disparity system. With the integral photography system, since routes of rays trace quite opposing routes at the times of image capturing and image reconstruction, when the number of rays can be sufficiently large, and a sufficiently small pixel size can be assured, a nearly perfect stereoscopic image can be reconstructed. For this reason, an ideal integral system is classified as the spatial image reconstruction method.

According to the aforementioned embodiments, the television broadcast receiver 111 can output (display) a 2D or 3D image according to the genres of programs. Also, the television broadcast receiver 111 can adjust 3D image quality according to the genre of each program. Therefore, a 3D-compatible device suitable for the user can be provided.

According to at least one embodiment, a video processing apparatus and video processing method, which output a 2D or 3D image according to various conditions can be provided.

The various modules of the embodiments described herein can be implemented as software applications, hardware and/or software modules, or components on one or more computers, such as servers. While the various modules are illustrated separately, they may share some or all of the same underlying logic or code.

## Claims

1. A video processing apparatus **characterized by** comprising:
a memory (261c) configured to store 2D or 3D output settings according to one or more genres;
a detector (261e) configured to detect a genre of an input video signal from genre information; and
a controller (261) configured to decide a 2D image or a 3D image to be output based on the output setting and the detected genre, and to execute control required to output a 2D image or a 3D image corresponding to the input video signal based on the output decision.

2. The apparatus according to claim 1, **characterized by** further comprising:
a selector (17) configured to select the 2D or 3D output setting for a designated genre.

3. The apparatus according to claim 1 or 2, **characterized by** further comprising:
a parameter memory (261c) configured to store 3D processing parameters according to one or more genres; and
a 3D video output module (114) configured to output a 3D image corresponding to the input video signal based on the detected genre and the 3D processing parameter.

4. The apparatus according to one of claims 1 to 3, **characterized in that** the controller is configured to execute control required to switch to enable or disable a 3D conversion function required to convert the 2D image corresponding to the input video signal into the 3D image based on the output setting and the detected genre.

5. The apparatus according to one of claims 1 to 4, **characterized in that** the controller is configured to execute control required to switch to enable or disable a 2D conversion function required to convert the 3D image corresponding to the input video signal into the 2D image based on the output setting and the detected genre.

6. The apparatus according to one of claims 1 to 5, **characterized in that** the memory is configured to store the 2D or 3D output settings according to one or more genres and one or more input sources.

7. The apparatus according to one of claims 3 to 6, **characterized by** further comprising:
a 3D converter (254a) configured to convert the 2D image into the 3D image,
**characterized in that** the 3D converter is configured to convert the 2D image corresponding to the input video signal into the 3D image based on the output setting, the detected genre, and the 3D processing parameter.

8. The apparatus according to one of claims 1 to 7, **characterized in that** the controller is configured to execute control required to output the 2D image or the 3D image for 3D glasses corresponding to the input video signal.

9. The apparatus according to one of claims 1 to 7, **characterized in that** the controller is configured to execute control required to output the 2D image or the 3D image for the naked eye corresponding to the input video signal.

10. The apparatus according to one of claims 1 to 9, **characterized by** further comprising:
a 2D converter (254b) configured to convert the 3D image into the 2D image,
**characterized in that** the memory is configured to store a first output setting required to output the 2D image or the 3D image of a first genre as a 2D image, and
the controller is configured to output the 2D image of the first genre or to convert the 3D image of the first genre into the 2D image and to execute control required to output the converted 2D image based on the first output setting and the detected genre.

11. The apparatus according to one of claims 1 to 6, 8, and 9, **characterized by** further comprising:
a 3D converter (254a) configured to convert the 2D image into the 3D image,
**characterized in that** the memory is configured to store a second output setting required to output the 2D image or the 3D image of a second genre as a 3D image, and
the controller is configured to output the 3D image of the second genre or to convert the 2D image of the second genre into the 3D image and to execute control required to output the converted 3D image based on the second output setting and the detected genre.

12. A video processing method **characterized by** comprising:
detecting a genre of an input video signal from genre information; and
deciding a 2D image or a 3D image to be output based on a 2D or 3D output setting according to a genre and the detected genre, and executing control required to output a 2D image or a 3D image corresponding to the input video signal based on the output decision.
